# EUROPEAN PATENT SPECIFICATION

(11) **EP 0 784 917 B1**
(45) Date of publication and mention of the grant of the patent: **10.04.2002**
(21) Application number: 97200040.0
(22) Date of filing: 08.01.1997
(51) Int. Cl.: A01C 17/00

(54) **An implement for spreading granular and/or pulverulent material**
Schleuderstreuer für körniges Gut
Epandeur centrifuge pour produits granulés ou puchérulent

(30) Priority: 22.01.1996 EP 96200071
(43) Date of publication of application: 23.07.1997
(73) Proprietor: MAASLAND N.V., 3155 PD Maasland (NL)
(72) Inventor: Bom, Cornelis Johannes Gerardus, 3181 VC Rozenburg (NL); van der Vlugt, Hendrik Hans, 3155 VK Maasland (NL); van der Waal, Pieter Jacob, 3145 LB Maassluis (NL)
(74) Representative: Corten, Maurice Jean F.M.

(56) References cited:
- EP-A- 0 298 549
- EP-A- 0 693 251
- GB-A- 2 074 832

## Description

The present invention relates to an implement for spreading granular and/or pulverulent material, which implement comprises both a hopper provided with at least one outlet opening and at least one spreading member, where the outlet opening is capable of being further closed or opened at choise by a metering slide, the end of which, directed to the outlet opening, being provided with an indented edge.

A suchlike implement is disclosed by EP-A-0693251, being a document only relevant pursuant to Art. 54(3) and (4) EPC. By such an implement a metering slide is produced in such a way that the supply from the hopper to the spreading member is influenced in an advantageous manner such that upon supplying both small and large amounts of material per unit of time to the spreading member, the latter will always broadcast and distribute the material evenly over the desired width in an advantageous manner over the surface to be covered. When the outlet opening is reduced by the metering slide, at a certain moment the indented edge will operate in conjunction with the edge of the outlet opening in such a way that there are formed a plurality of small passage openings lying side by side so that the above-mentioned desired effect will be realized.

In order to further improve the above implement said indented edge is provided with tines in the plane of the metering slide, the height of which tines decreasing the more an indentation is situated in the vicinity of the longitudinal centre line of the outlet opening. In this manner, at a certain moment during shutting off, there is formed in the centre a larger outlet opening than at the lateral sides, so that in the centre of the spread pattern there is broadcast relatively much material whereas, laterally, the amount of material decreases. Consequently it is possible, also at a smaller metering of the amount of material per unit of time, to obtain a trapezial or a spherical spread pattern. According to again an other inventive feature the outlet opening is substantially right-angled and located substantially perpendicularly to a perpendicular centre plane through an axis of rotation of a spreading member.

In accordance with an other aspect of the invention the indented edge is symmetrically situated in relation to the perpendicular centre plane of the outlet opening.

In order to obtain an acceptable spread pattern with a great number of different types of fertilizer, according to a further inventive feature the outer tines have a height of approximately 8.5 mm, whereas the inner tines have a height of approximately 4.5 mm. According to a further inventive feature the indented edge comprises four tines. According to again an other aspect of the invention the distance between the tops of the tines amounts to approximately 23 mm. In accordance with again an other inventive feature the sides of the outer tines include an angle of approximately 40° with the base of the tines, whereas the sides of the inner tines include an angle of approximately 23° with the base of the tines. In order to avoid that on the outside of the spread sector there is broadcast too little material, the metering slide extends straight from the edge of the outlet opening to the outer tine over a length of approximately 4 mm until the base of the outer tine. Consequently there is formed a relatively large passage opening, when, during shutting off of the outlet opening by the metering slide, the outer tines operate in conjunction with the edge of the metering opening.

The invention will now be further explained with reference to the accompanying drawings of an advantageous exemplary embodiment of the implement according to the invention, in which drawings:
Figure 1 shows a side view of the exemplary embodiment of the implement according to the invention;
Figure 2 is a plan view of a part of the implement taken in the direction of the arrow II of Figure 1;
Figure 3 is a sectional view in elevation of a part of the implement taken on the line III-III of Figure 2;
Figure 4 is an enlargement of a part of Figure 2;
Figure 5 is a plan view of a stirring member in the hopper, and under the hopper, a guard provided near the outlet opening, and a supporting member;
Figure 6 is a sectional view in elevation of the guard and the supporting member for the metering slide;
Figure 7 shows a side view of the locking mechanism for the metering slides;
Figure 8 shows a top view of this locking mechanism;
Figure 9 is an enlarged view of an outlet nozzle of a further embodiment of the implement according to Figure 1;
Figure 10 is an enlargement of a cross-sectional view of the outlet nozzle, according to the line IX-IX in Figure 9, and
Figure 11 shows an enlarged view of the outlet opening and the metering slide in accordance with Figure 9.

In the drawings, corresponding parts have been indicated by the same reference numerals.

The implement shown in the drawings is an implement which, for spreading granular and/or pulverulent material over a surface area, is propelled over this area. The invention particularly relates to a fertilizer spreader for broadcasting fertilizer over agricultural lands.

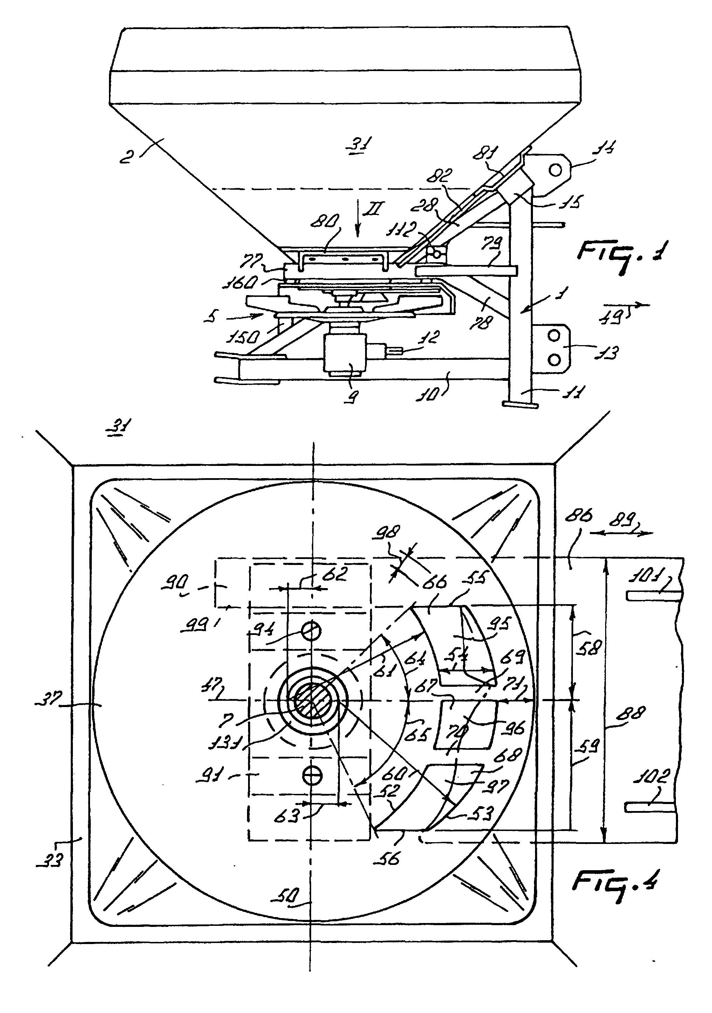

The implement comprises a frame 1, on which a hopper 2 is mounted. The hopper comprises two outlet nozzles 3 and 4. A spreading member 5 and a spreading member 6 are disposed under the respective nozzles. The spreading members 5 and 6 are mounted on shafts 7 and 8, respectively. These shafts 7 and 8 are bearing-supported in gearboxes 9, of which only one is shown in the drawings. The gearboxes 9 are mounted on two supporting beams 10 disposed in a V with respect to each other and having their front ends attached to main frame beams 11 of the frame 1. When the implement is in a horizontal position, the main frame beams 11 extend vertically, while, viewed transversely to the direction of travel of the implement, they are at a certain mutual distance. The supporting beams 10 converge from the main frame beams 11 rearwards and their rear ends are interconnected. The gearboxes comprise conical gear transmissions connected with the respective shafts 7 and 8. The gear transmissions provided in the gearboxes 9 are connected with each other by means of a connecting shaft provided between the two gearboxes. This connecting shaft is coupled to a drive shaft 12. During operation of the implement, the drive shaft 12 can be connected with the power take-off shaft of a tractor or similar vehicle, to which the implement is coupled during operation. For this coupling to the tractor or other similar vehicle, the frame is provided with, firstly, two coupling members 13 which are connectable with the bottom links of the power lift of the tractor and, secondly, a coupling member 14 connectable with the top link of the power lift of the tractor. The coupling member 14 is attached to a cross beam 15 which interconnects the upper ends of the main frame beams 11. As is apparent from Figure 1, the front side of the hopper 2 is attached to the cross beam 15.

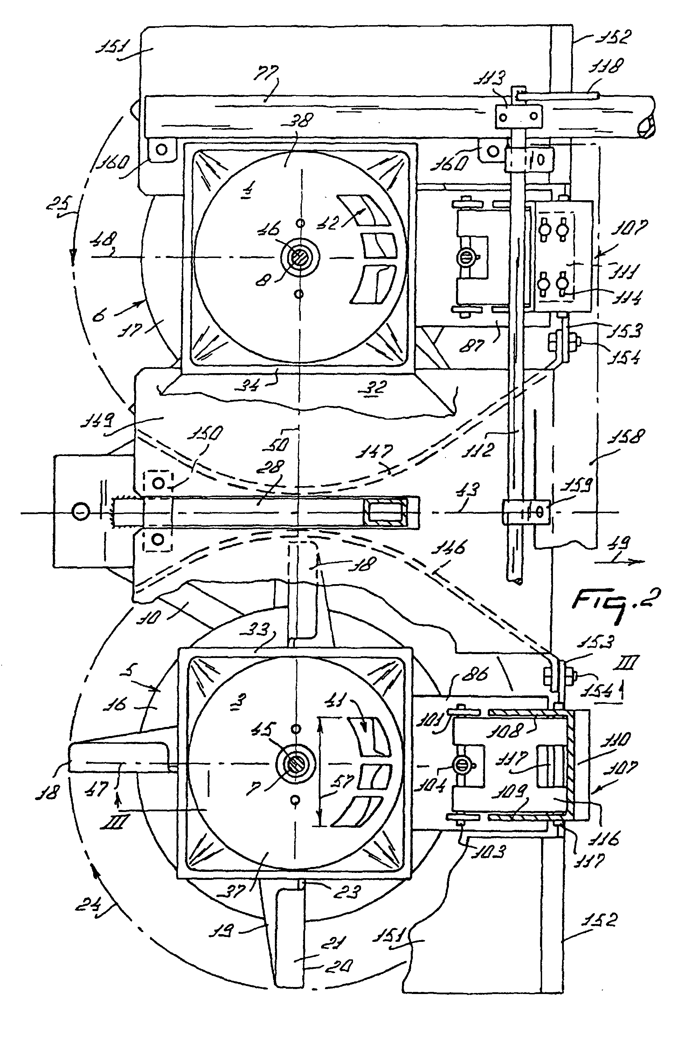

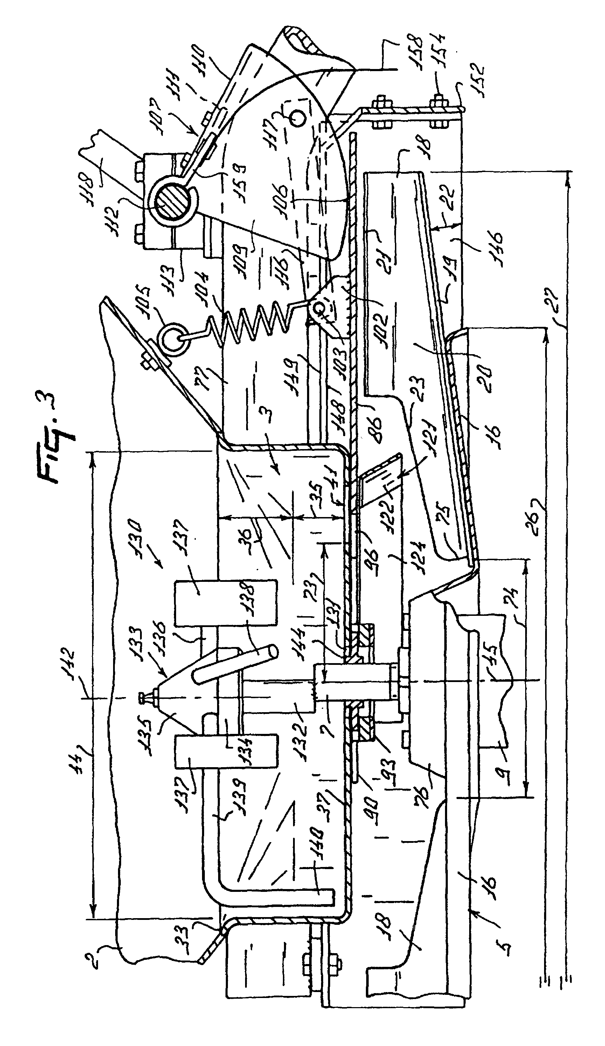

In this embodiment of the invention, the two spreading members 5 and 6 each comprise a broadcasting plate, 16 and 17 respectively, which is round and equipped with spreading blades 18. In the present embodiment, each spreading member comprises four spreading blades in a uniform angular arrangement round the respective shafts 7 and 8 of the spreading members 5 and 6. The spreading blades extend at least essentially radially with respect to the relevant broadcasting plate shaft. The spreading blades extend to beyond the circumference of the broadcasting plate 16, as shown (Figure 3) with regard to the spreading member 5. The spreading blades of each spreading member are mutually identical and each of them comprises a lower flange 19. These lower flanges are parallel to, and are mounted to the top surface of the broadcasting plate 16 which is - as is also the case in the present exemplary embodiment - preferably conical at a small angle 22 of e.g. approximately 5° and, as counted from the centre of the spreading member outwards, extends upwardly. As shown in Figure 2, each lower flange 19 tapers off, from a relatively wide part which is relatively close to the centre of the spreading member to the end of the blade. The top sides of the spreading blades each comprise an upper flange 21 extending perpendicularly to the relevant rotary axis. This upper flange has a constant width over its full length (Figure 2), this width being equal to that of the outer end of the lower flange 19. The lower flange 19 and the upper flange 21 of each spreading blade face forwards in relation to the respective directions of rotation 24 and 25 of the spreading members 5 and 6. Each spreading blade has an upright wall 20 which extends straight up in the present embodiment, but which can also be slightly curved. The upper flange 21 extends over approximately half the length of the spreading blade. The upper flange 21 runs from a position within the perimeter of the broadcasting plate to the spreading blade end situated out of this perimeter. Starting from the inner end of the upper flange 21, the wall 20 is reduced in height. In the place of the inner end of the upper flange 21, the height of the blade is reduced by approximately 50%. Herewith, a lowered top side 23 of the wall 20 has been formed essentially parallel to the top side of the broadcasting plate 16. Accordingly, the top side 23 runs obliquely downwards in the direction of the shaft of the spreading member. The broadcasting plate of each of the spreading members has a diameter 26. The ends of the spreading blades are on a circle of diameter 27 concentric with the shaft of the spreading member, where this diameter is approximately 1.25 times the diameter 26 of the broadcasting plate.

The spreading members 5 and 6 are carried by the supporting bracket part made up by supporting beams 10. On the rear side of the supporting beams 10, the supporting bracket part is connected with the cross beam 15 by means of a stay 28.

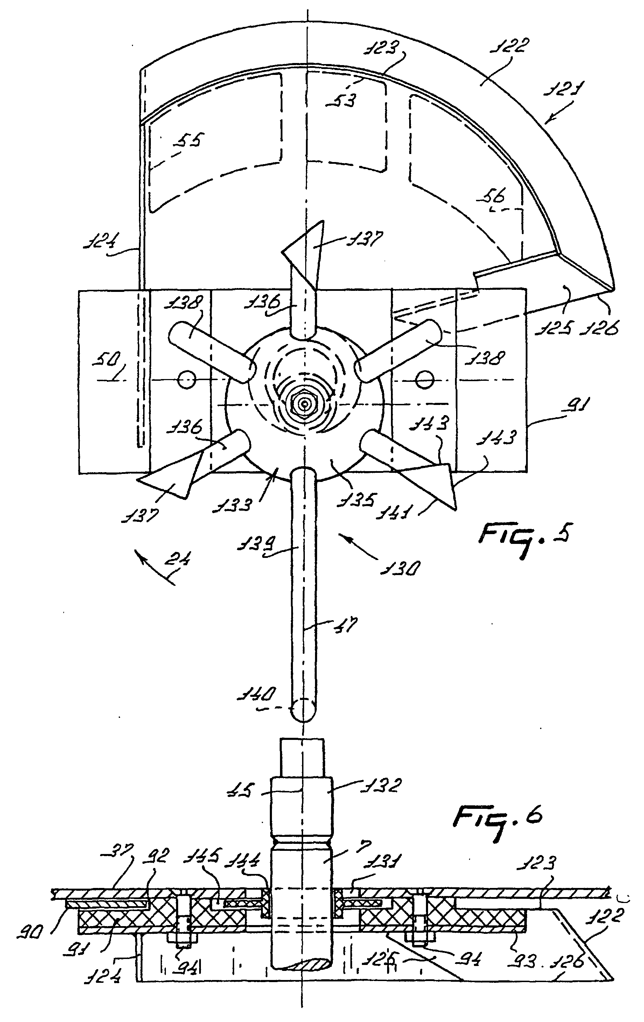

The hopper 2 comprises two, in relation to the direction of travel 49 transversely separated, funnel-shaped parts 31 and 32, whose lower ends are connected with the respective top edges 33 and 34 of the outlet nozzles 3 and 4. The outlet nozzles 3 and 4 are mutually identical and, hence, only the outlet nozzle 3 will be further described, particularly with reference to Figures 3 and 4. The outlet nozzles 3 and 4 are cylindrical as regards the lower part 35, and, from this cylindrical part 35 upwards, the upper part 36 is a transition from a circular to a rectangular shape such that the top edges 33 and 34 of the respective outlet nozzles 3 and 4 fit the rectangular bottom ends of the funnel-shaped parts 31 and 32 converging in downward direction, which are rectangular as viewed in horizontal cross-section, and which are in the shape of an inverted pyramid.

Each of the outlet nozzles 3 and 4 has a bottom 37 or 38 which is horizontal when the machine is in a horizontal position. The bottoms 37 and 38 constitute wall parts of the walls enclosing the hopper volume. The outlet nozzles 3 and 4 each have an outlet opening 41 and 42 respectively, which outlet openings being mutually equal and being disposed such that they are each other's mirror image in relation to the centre plane 43 of the implement. The respective outlet openings 41 and 42 have three separate passage parts each. The bottom ends 35 of the outlet nozzles 3 and 4 have an inner diameter 44 which is approximately 280 mm in the present exemplary embodiment, but which may also be somewhat larger or smaller. The centre line of this cylindrical bottom end 35 of the outlet nozzle coincides with that of the respective funnel-shaped part 31 or 32 of the hopper. These centre lines 45 and 46 also coincide with the centre lines of the spreading members or their shafts 7 and 8, respectively. The rotary axes 45 and 46 lie at equal distances from the centre plane 43 and in planes 47 and 48 comprising the rotary axes of the spreading members or the centre lines of the outlet nozzles 3 and 4, and extending parallel to the centre plane 43, and running parallel to the normal direction of travel 49 of the implement during operation.

In relation to the normal direction of travel 49 of the implement, the outlet openings 41 and 42 in each of the outlet nozzles are situated in front of the transverse plane 50 comprising the centre lines 45 and 46 of the bottom parts 37 of the outlet nozzles. The bottom parts 37 and 38 of the two outlet nozzles extend perpendicularly to the centre lines 45 and 46, or the axes of rotation of the spreading members 5 and 6. The outlet openings 41 and 42 are mutually identical, and therefore only the outlet opening 41 will be further described. The outlet openings 41 and 42 are curved round the centre lines of the respective bottom parts. The outlet opening 41 has a curved inner side 52 and a curved outer side 53. These sides are at a mutual distance 54 which is constant over the length of the outlet opening enclosed by two short, mutually opposite sides 55 and 56. These short sides 55 and 56 are mutually parallel as well as parallel to the longitudinal plane 47. The opening 41 has a width 57, as measured between the short sides 55 and 56, which is approximately equal to half the diameter of the bottom 37. On both sides of the longitudinal plane 47, the opening 41 extends over distances 58 and 59. The distance 59 is slightly greater than the distance 58. The distance 59 is on that side of the plane 47 which is remote from the side of the centre plane 43. The sides 52 and 53 each are curved round a point which is in the plane 47 and on the upper side of the bottom 37. The radius 60 of the inner side 52 equals the radius 61 of the outer side 53, where the centres of these radii are situated at distances 62 and 63, respectively, on opposite sides of the centre line 45. An imaginary curve situated centrally between the curved sides 52 and 53 and being parallel to these sides has its centre on or near the centre line 45. The distance 62 is behind, and the distance 63 is before the centre line 45, as considered in relation to the normal direction of travel 49 of the implement during operation. On both sides of the plane 47, the outlet opening 41 extends over angles 64 and 65 round the centre line 45, where the angle 64 is slightly smaller than the angle 65. The outer side 53 of the outlet opening is at a distance 71 from the inner side of the circumference of the cylindrical part 35 of the outlet nozzle. The distance 71 is virtually equal to, or, such as in the present embodiment, only slightly shorter than the distance 54 between the curved sides 52 and 53 of the outlet opening.

In this exemplary embodiment of the invention, each of the outlet openings 41 and 42 consists of three, mutually separate parts forming passages 66, 67 and 68. These relatively small passages are mutually separated by two bottom strips 69 and 70, which extend between the opposite curved edges (or sides) 52 and 53. The passage parts 66 and 68 are virtually identical. The passage part 67 is considerably smaller than the parts 66 and 68. The passage part 67 extends over a part of the arcs 52 and 53 which is approximately half as large as the approximately mutually equal parts of the arcs 52 and 53 over which the outlet openings 66 and 68 extend. The passage part 66 is almost entirely on one side of the plane 47, whereas the parts 67 and 68 are virtually completely on the other side of this plane 47. The part 66 is situated on that side of plane 47 which faces the plane 43.

Corresponding parts of the outlet opening 42 in the outlet nozzle 4 are indicated by the same reference numbers as used with the outlet opening 41, because of the fact that these openings are identical and are symmetrically situated in relation to the centre plane 43 of the implement.

Viewed parallel to the rotary axes of the spreading members, or the centre lines of the outlet nozzles, the outlet openings 41 and 42 are situated above the disc-shaped parts 16 of the spreading members 5 and 6. The diameter 44 of the outlet nozzles is smaller than that of the discs 16. The curved side 52 is at a distance 73 from the rotary axis of the spreading member located under the relevant opening, which distance is greater than half the diameter 74 at which the inner ends 75 of the spreading blades are concentrically disposed round the axis 45. Viewed parallel to the axis 45, the outlet opening 41 is above the lowered parts of the spreading blades. The spreading blade ends 75 connect, through a short distance, to a raised, in this exemplary embodiment a conical, central part 76 attached to the shaft 7. The central part 76 is within the distance 73 (Figure 3).

Near the bottom parts 37 and 38 of the outlet nozzles, the hopper 2 is supported by hopper supports 77. With the machine being in a horizontal position, these supports are horizontally oriented and they extend perpendicularly to the main frame beams 11. The hopper supports 77 are on mutually opposite sides of the outlet nozzles 31 and 32 and, as viewed in the direction of travel 49, they are behind the main frame beams 11. The hopper supports 77 are connected with the main frame beams 11 by means of bent parts 78 directed downwardly, the arrangement being as is clearly shown in Figure 1. The attachment of the hopper supports 77 to the main frame beams 11 is stiffened by supporting rods 79. The connection between the hopper and the hopper supports 77 comprises brackets 80 which are fastened to the hopper wall and the hopper supports 77. Moreover, the hopper 2 has its front connected to the cross beam 15 by means of brackets 81. In between the brackets 81 and the hopper supports 77, virtually in the same plane as the main frame beams 11 and the hopper supports 77, there are provided braces 82.

Close to the outlet openings 41 and 42 there are provided metering slides 86 and 87, respectively, by means of which the outlet openings can be optionally opened or closed to any extent. In this exemplary embodiment of the invention, the metering slides 86 and 87 lie against the respective undersides of the bottoms 37 and 38 of the outlet nozzles 3 and 4 of the hopper 2. The metering slides 86 and 87 are placed symmetrically to the centre plane 43 and in relation to this plane they are symmetrical in shape. Because the metering slides 86 and 87 are identical, their shape will be further explained with reference to the metering slide 86. The metering slide 86 has a width 88 which is greater than the width 57 of the outlet opening 41. To be able to open or close the respective outlet openings 41 and 42 to any extent at choice, the metering slides 86 and 87 are mounted in the frame such that they are capable of reciprocating in a direction as indicated by the arrow 89. This reciprocating motion 89 is parallel to the normal direction of travel 49 of the implement during operation and also parallel to the centre plane 43 of the implement.

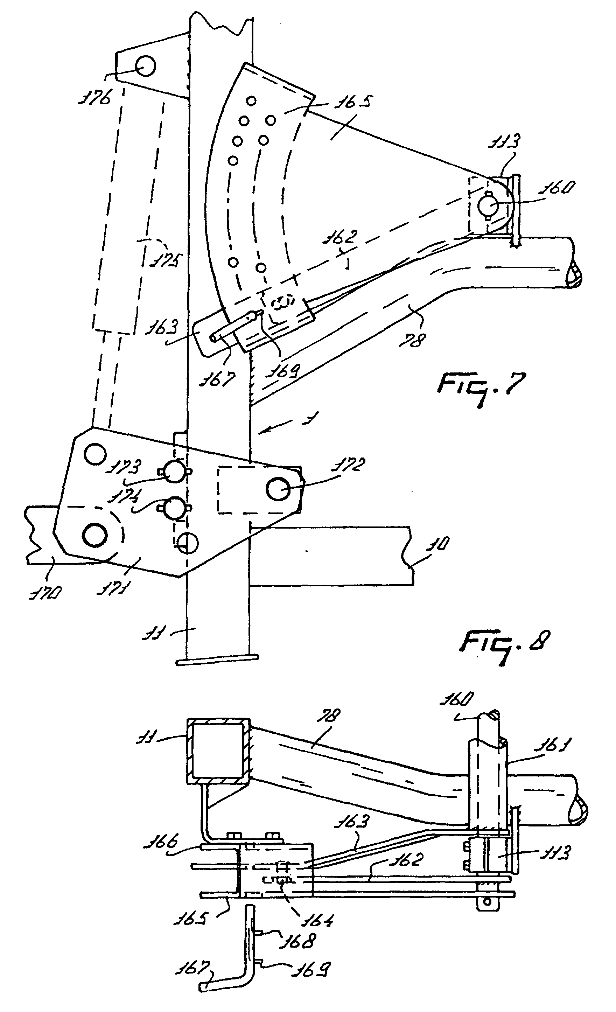

The metering slide 86 is provided with a finger-shaped support 90 (Figures 4 and 6) which is movably mounted between the underside of the bottom 37 and a supporting part 91. The supporting part 91 is made of synthetic material, e.g. nylon, and, when viewed from above, it is rectangular. The long sides extend perpendicularly to the directions 49 and 89. The guide support 90 is in a groove 92 formed on the top surface corner side and along the short side of the supporting part 91. The underside of the supporting part 91 is covered and supported by a metal plate 93 which is attached to the bottom 37 by means of the fastening bolts 94 for the supporting part 91. The guide support 90 extends in the direction of motion 89. The side 99 of the support 90 is parallel to the side 55 of the outlet opening 41. Viewed from above (Figure 4), the side 99 coincides with the side 55 or its extension.

The side of the metering slide 86 which operates in conjunction with the outlet opening 41 is provided with three indentations 95, 96 and 97. These indentations work in conjunction with the passages 66, 67 and 68, respectively. In principle, the widths of the indentations 95, 96 and 97 virtually correspond with the widths of the respective passages 66, 67 and 68. Measured along the curved sides 52 and 53, the indentations 95, 96 and 97 according to the invention are as shown in Figure 4. Both the deepest and the least deep portions of the indentations 95, 96 and 97 lie at least approximately on a relevant imaginary curve running parallel to the curved sides 52 and 53. The width 88 of the metering slide 86 is such that the outlet opening 41 in the transverse direction is fully covered by the slide when the outlet opening is partly or fully closed.

Beyond the perimeter of the outlet nozzle 3, the metering slide 86 is provided with two lugs 101 and 102, in which a shaft 103 is bearing-supported. At half its length, the shaft 103 is coupled to an extension spring 104 which extends from the shaft 103 upwardly and is connected with an attaching eye 105 provided on the front of the hopper 2. The spring 104 exerts such a tractive force on the shaft 103, and consequently on the slide 86, that the top surface of the slide, as for the portion situated under the bottom 37, is drawn to and against this bottom 37. The portion of the slide which is on the other side of the lugs 101 and 102 and the shaft 103 than the portion which abuts against the bottom 37 bears against curved sides 106 of a sector-shaped support 107. In a sectional plan view, the support 107 is U-shaped and comprises two side plates 108 and 109 and a central part 110 interconnecting the side plates 108 and 109. The central part 110 is bolted to a mounting strip 111 rigidly attached to an adjusting shaft 112. The side plates 108 and 109 with their curved sides 106 are centrically located round the centre line of the adjusting shaft 112. The shaft 112 is supported in bearings 113 disposed on the two hopper supports 77, the arrangement being as is further shown in Figures 2 and 3. The shaft 112 is mounted in the bearings 113 for rotation about its own longitudinal axis. The shaft 112 is secured against motion in longitudinal direction in relation to the bearings 113. The central part 110 is provided with slotted holes 114 to enable the sector-shaped supports 107 to be adjusted parallel to the adjusting shaft 112. The supports 107 can thus be adjusted correctly with respect to the metering slides when they are coupled with them.

The metering slide 86 is hinge-connected with the sector-shaped support 107. To this end, the shaft 103 is by means of a connecting member 116, H-shaped in a plan view, connected with a hinge shaft 117 which extends between the side plates 108 and 109 and is mounted in these plates. The legs of this H are provided with holes, through which the respective shafts 103 and 117 extend such that these shafts are bearing-supported in the relevant legs of the H-shaped connecting member and are capable of rotating in relation thereto.

The adjusting shaft 112 is provided with an adjusting arm 118 which is connected with an adjusting mechanism in a manner not further indicated. The nature of the adjusting mechanism is optional, for instance, the adjusting mechanism is manually operated or controlled by e.g. a computer. This adjusting mechanism serves to move, in the manner as desired, the slide 86 and the corresponding slide 87 in one of the directions of forward/backward motion for further closing or opening the respective outlet openings 41 and 42, as the case may be, through the mentioned connection between the adjusting arm 118 via the adjusting shaft 112 and the sector-shaped supports 107. The slide 87 is arranged and connected with the adjusting shaft 112 in the same way as is described with regard to the slide 86. Accordingly, corresponding parts are indicated by the same reference numbers. In respect of their situation and further design, the metering slides 86 and 87 with their connecting members 116 and the adjusting shaft 112 are of a symmetrical form with respect to the centre plane 43.

Between the bottom wall parts 37 and 38 and the spreading members 5 and 6 situated under them, there are provided guard members in the form of guard flanges 121. The guard flanges are placed under the outlet nozzles 3 and 4, where they connect to the perimeter of the outlet openings 41 and 42, respectively. The guard members 121 under the respective outlet nozzles 3 and 4 are symmetrical with respect to the longitudinal plane 43. In view of this, the shape of a guard member disposed under the outlet nozzle 3 will be further detailed, especially with reference to Figure 5. The guard member 121 comprises a curved part 122 designed as a guard flange, whose top side 123 connects to the underside of the perimeter of the outlet openings or the metering slide 86 being under them. Here, the top edge 123 is at approximately the same level as the horizontal side of the groove 92 in which the support 90 of the metering slide is placed. The edge 123 of the curved guard part is just outside of the perimeter curve 53 of the outlet opening 41 indicated by a dash line in Figure 5. The guard part 122 extends from the top edge obliquely downwards such that it diverges from the rotary axis 45, as is in particular apparent from Figure 6. Near the side 55 of the opening 41, the curved guard part 122 connects to a straight guard part 124 situated next to the side 55 and out of the opening 41, as seen in a plan view. When the machine is in a vertical position, the flange 124 extends vertically and is oriented parallel to the plane 47. The flange 124 extends from the curved guard part 122 rearwards to underneath the support 90 and to beyond the transverse plane 50. At the other end of the curved guard part 122 which extends to just beyond the edge 56 of the opening 41, the curved guard part 122 connects to a slightly radially oriented guard part 125. The part 125 constitutes a guard flange which is directed obliquely downwards from top to bottom. The guard part 125, as is shown in a plan view (Figure 5), is directed obliquely downwards and away from the opening 41. As is apparent from Figures 5 and 6, the guard member 121 is connected with the support 90 through the ends of the guard parts 124, 125 fastened to the underside of the plate 93. The guard member 121 reaches downwards, from the top side connecting with the underside of the metering slide 86 to a level just higher than the central part 76 of the spreading member and to a short distance from the top edge 23 of the spreading blades. This distance from the underside of the guard member to the top edges 23 of the spreading blades mounted on the spreading member will amount to a few millimetres, e.g. 3 mm. This distance shall not be less than is necessary to keep clear of the top edges 23 and will be at most about 6 mm. The lower edge 126 of the radial guard part 125 is essentially radial to the rotary axis of the spreading member situated under the relevant outlet part of the hopper, as is apparent from Figure 5. As is also shown in Figure 5, the radial guard part 125 is also directed obliquely downwards such that the curved guard part 122 and the guard part 125 diverge from each other. The guard parts 124 and 125, whose ends are attached to the underside of the plate 93, have their top edges which are situated out of the supporting part 91 at the same level as the edge 123 and they also connect to the underside of the metering slide 86, especially when the outlet opening 41 is shut off by the metering slide.

In the bottom zone of the hopper, especially in the outlet nozzles 3 and 4, there are provided delivery members in the shape of stirring members which keep the material loose in the outlet nozzles during operation, thus preventing the outlet nozzles from becoming clogged. These delivery members 130 disposed in the outlet nozzles 3 and 4 are identical to each other and are symmetrically arranged with respect to the centre plane 43. Therefore, only the stirring member 130, as installed in the outlet nozzle 3 and particularly depicted in Figures 3 and 5, will be further described. Figure 5 shows a plan view of the stirring member together with the supporting part 91 and the guard member 121. The location of the guard member 121 and that of the stirring member 130 in relation to the outlet opening are further shown by the outlet opening 41 being drawn in dash lines in Figure 5.

As is apparent from Figures 3 and 6, the shaft 7 of the spreading member 5 is led through a hole 131 in the bottom 37. The shaft 7 is at its upper end provided with an eccentric shaft 132 disposed eccentrically with respect to the rotary axis 45, which eccentric shaft 132 is fixed to the shaft 7. On the upper end of the eccentric shaft 132, which is approximately at the level of the top edge of the outlet nozzle 3, the stirring member 130 is rotatably mounted. The stirring member 130 comprises a carrier 133 which has a cylindrical lower part 134 and a conical part 135 tapering towards the top. The carrier 133 is capable of rotation about the eccentric shaft 132 constituting an axle for the stirring member. Equally distributed round the lower end of the conical part 135 there are provided three carrying arms 136 with stirring means 137 fastened to their ends. These means 137 are triangular in section and in plan view. The means 137 extend vertically, reaching to a height slightly higher than half the height of the conical part 135 and reaching to a depth beyond the lower end of the carrier 133. The lower ends of the stirring means 137 are at approximately half the height of the outlet nozzle 3. The top sides of the stirring means 137 extend in the lower zones of the funnel-shaped parts 31 of the hopper. The carrying arms 136 are at the height of the top of the outlet nozzles 3. Centrally between two adjoining carrying arms 136, two stirring arms 138 are fitted on the carrier 133. At the level of the underside of the conical parts 135, these stirring arms are attached thereto and extend downwardly parallel to this conical surface. The lower ends of these stirring arms 138 are at approximately the same level as the lower ends of the stirring means 137. Centrally between two carrying arms 136 where no stirring arm 138 is provided, there is provided a stirring arm 139. This stirring arm 139 extends horizontally from the lower end of the conical part 135 to near the top edge of the outlet nozzle 3. In this position at the top edge, the stirring arm has a bent-down part 140 which reaches to just above the bottom 37 of the outlet nozzle 3 and which is parallel to the cylindrical wall part of the outlet nozzle 3, the arrangement being as is shown by Figure 3. As is apparent from Figure 5, the triangular shape of the stirring means 137, as seen in a plan view, includes a side 141 which is virtually radial to the centre line 142 of the stirring member. The two remaining sides 143 of the stirring means are equal, so that the two sides 143 and the bottom side 141 make up an isosceles triangle. In a plan view (Figure 5), the bottom sides 141 are before the sides 143 in relation to the direction of rotation 24 of the spreading member 5.

Round the mutually facing sides of the two spreading members 5 and 6 there are provided guide flanges 146 and 147. The guide flanges 146 and 147 are situated round a part of the circumference of the spreading members, as is apparent from Figure 2. Their rear parts reach to beyond the rear side of the outlet nozzles 3 and 4 (Figure 4), while their front parts reach to beyond the front side of the spreading members, as is apparent from Figure 2. On top of the guard flanges 146 and 147 there is provided a guard plate 149 which extends between the outlet nozzles 3 and 4 and over approximately the same length as indicated with regard to the guide flanges 146 and 147. The guard plate 149 extends horizontally and it is bent down on the front side, where this front part, in common with the guard flanges 146 and 147, extends downwards as far as the level of the underside of the broadcasting plate 16. The guard plate 149 and the top edges 148 of the guide flanges 146 and 147 are at a level slightly above the underside of the outlet nozzles 3 and 4. The guard flanges 146 and 147 and the guard plate 149 are attached to a support 150 disposed on the lower end portion of the stay 28. On the side of the metering slide 86 not facing the other metering slide 87 as well as on the side of the metering slide 87 not facing the metering slide 86 there are provided side guard plates 151, which are at the same level as the guard plate 149 and extend longitudinally parallel to the plane 43 over the same distance as the guard plate 149 and the guide flanges 146 and 147. On the front, the side guard plates have front sides 152 which are directed downwards and which extend over the same height as the guard flanges 146 and 147, the arrangement being as is shown in Figure 3. Attached to the front side 152 there are projections 153, through which the side guard plates 151 are fastened to the fronts of the guard flanges 146 and 147 by means of bolts 154. The side guard plates 151, with the sides facing the outlet nozzles 3 and 4, are partly situated round the circumference of the round outlet nozzle parts 3 and 4. The side guard plates 151 are connected to the hopper supports 77 by means of brackets 160.

The hole 131 in the bottom 37, which is considerably wider than the diameter of the shaft, is round the shaft 7 sealed by means of a sealing ring 144 which is liberally movable in lateral direction in a recess 145 provided in the supporting part 91, the arrangement being as is shown in Figure 6. Owing to the fact that the hole 131 is wide by comparison with the shaft 7, this shaft together with the axle 132 attached eccentrically thereto can be fed through the hole 131 into the hopper.

The implement is especially designed for spreading material over a surface while it is travelling over this surface. For this purpose, the implement is capable of being connected to e.g. the lifting device of a tractor or similar vehicle by means of the coupling members 13 and 14. The drive shaft 12 can then be coupled to the power take-off shaft of the tractor through an intermediate shaft, so that during operation the spreading members 5 and 6 can be brought into rotation. During operation, the material is carried along in the hopper 2 and fed therefrom to the then rotating spreading members 5 and 6. During operation, the spreading members 5 and 6 are made to rotate in mutually opposite directions of rotation 24 and 25. Here, the mutually adjacent sides of the two spreading members move in the normal operational direction of travel 49 of the implement.

The outlet openings 41 and 42 are symmetrically situated with respect to the centre plane 43. The size of the respective openings 41 and 42 has been chosen, and the shape of the same has been designed such that, over a relatively large angle round the rotary axis of the spreading members, the material is supplied to the spreading members and can be broadcast over a large angle by these. In this exemplary embodiment of the invention, the openings 64 and 65 are approximately 45° and approximately 65° respectively. Preferably, the sum of these angles shall not be less than 80° and not be more than 140°. Partly owing to its shape, each of the spreading members spreads material over an angle of about 180° round its rotary axis. At the front of the spreading members, material is spread essentially transversely to the direction of travel 49, from the front of the right-hand spreading member to the right and from the front of the left-hand spreading member to the left. The two spreading members broadcast the material at the front side in opposite, divergent directions. At the rear of the spreading members, material is also spread essentially transversely to the direction of travel 49, but in opposite direction as compared with the front side. The two spreading members each throw the material over approximately the same distance on both sides of the plane 43, so that the distribution patterns of the two spreading members overlap virtually completely. The form and size of the outlet openings 41 and 42 have been chosen, and - partly in view of the form of the spreading member - the location of these openings is such that most types of fertilizer or other equivalent materials can be spread in a uniform distribution. The two spreading members spread the material to both sides of the centre plane 43 such that the material as a whole is evenly spreadable over a wide strip when the implement is moving forward over the field to be covered. With his, the uniform spread is achieved no matter whether more or less material is spread per unit of time or per unit of area, as the case may be.

The amount of material capable of flowing through the outlet openings 41 and 42 per unit of time is adjustable by closing or opening them further by means of the metering slides 86 and 87. The edges of the metering slides 86 and 87 operating in conjunction with the outlet openings in closing or opening them to any extent are zigzag-shaped. This goes with the formation of indentations 95, 96 and 97. These indentations have been chosen such that each of them operates in conjunction with one of the outlet opening parts 66, 67 and 68. The indentations 95, 96 and 97 have been chosen such that, even at a very small size of passage of each of the outlet openings 41 and 42, each of the parts 66, 67 and 68 forms an opening with a small-size passage. These small passage openings are then formed by the curved edge 52 of the opening 41 or 42 and the respective sides of the indentations 95, 96 and 97 or parts of the same, as the case may be. So, even when very small amounts per unit of time are allowed to flow from the hopper through the outlet openings, material will flow to the spreading members over a wide angle about the respective rotary axes of the spreading members. Accordingly, when small amounts of material per unit of time are to be spread, the material will still be capable of being spread over the full broadcasting angle of approximately 180° by means of the spreading members, whereby a desired distribution over the strip to be covered is feasible, when travelling in the direction 49. The curved edge 52 is a closing or sealing edge, over which the deepest parts of the indentations 95 to 97 are moved when the outlet is being closed completely. All this can also be achieved when the intermediate strips 69 and 70 are omitted.

The metering slides are easily operable by an adjusting mechanism, to which they are connected through the shown constructions comprising the sector-shaped supports 107, the connecting members 116 and the adjusting shaft 112. The metering slides can easily move forwards and backwards, because they are under pressure abutting the bottoms and sector-shaped supports. This motion is guided by the position of the respective finger-shaped supports 90 in the grooves 92 of the supporting parts 91. The spring 104 keeps the metering slides in a suitable manner against the underside of the bottom 37 for appropriate connection of the metering slides to the bottom of the outlet openings. Furthermore, the metering slides are appropriately supported by the curved sides 106 of the sector-shaped supports 107, which is maintained when the adjusting arm 118 is rotated and the curved sides 106 roll on the top surface of the respective metering slides 86 and 87. The desired motion of the metering slides can be controlled by an adjusting mechanism, which may be of any design and which is coupled to the adjusting shaft 112 through the adjusting arm 118. The finger-shaped support 90 fits loosely in the groove 92 such that any material landing between the bottom and the metering slide does not jam the metering slide. Material which has landed between the bottom and the metering slide can be eliminated by moving the metering slide forwards and backwards.

A suitable supply of material from the hopper nozzles 3 and 4 via the respective outlet openings 41 and 42 is ensured by the stirring member 130. Rotation of the spreading member causes this stirring member 130 to move slightly in the outlet nozzles through the eccentric motion of the eccentric shaft 102 about the centre line of the respective shafts 7 and B of the spreading members. In dependency of the resistance met with by the stirring member 130 in the material provided at the bottom of the hopper, the stirring member with the stirring arms attached to it will make a short motion governed by the eccentricity of the eccentric shaft 132 of the shaft 7. Should a more or less hollow space or cavity come into being in or just above the outlet nozzle of the hopper because the material does not sufficiently flow in the direction of the outlet opening, then the stirring member will rotate about the centre line of the eccentric shaft 132. This will keep the material sufficiently loose and prevent the material from clogging up the outlet nozzles or the hopper funnels, as the case may be.

Material delivered through the outlet openings 41 and 42 is, within the contour of the guard member 121, fed to the relevant spreading member. Here, the guard member 121 acts as a guide for the material, so that e.g. in the event of heavy oscillating motions of the implement, the material can still flow to the desired supply point of the spreading member. Furthermore, the guard member 121 has as its function to prevent that granules which come into contact with the spreading member, e.g. with the blades, will fly about in an undesired manner. The guard member keeps the material in the vicinity of the inner ends of the spreading blades in order to have it spread in the desired way via the spreading blades. A smooth reception of the material by the spreading member is favourably influenced by the lowered inner part of the spreading blade and the narrow top side 23 thereof. The guard member 121 connects to the top edges or sides 23 of the lowered inner parts of the spreading blades. This ensures a suitable flow of material from the outlet openings to the spreading members. The material can thus be appropriately scattered by the spreading blades so as to obtain a uniform spread of material. The front sides 152 of the side guard plates 151 and the rear ends of the guard flanges 146 and 147 are situated such that the two spreading members are capable of spreading the material advantageously over the large spreading angles of approximately 180°.

The spreading members 5 and 6 are further screened off by the guard plates 149 and 151 and the guard flanges 146 and 147. These guard parts prevent e.g. that air streams caused by wind or similar things adversely affect the broadcasting of material. Further, rebounding granules will not be spread in an undesired manner.

Below the adjusting shaft 112 and between the front of the guard plates 149 and 151 and the front of the sector-shaped supports 107 there is provided a guard member 158. This member 158 is suspended from the shaft 112 and extends downwards to beyond the front of the guard plates 149 and 151 and the sector-shaped supports 107. The guard member 158 extends virtually over the full length between the hopper supports 77. The guard member 158 is suspended from the adjusting shaft 112 by means of hook-shaped parts 159. The hook-shaped parts 159 are mounted freely rotatable about the adjusting shaft 112, so that the guard member 158 remains hanging downwards over the front of the guard plates 149 and 151 in case the adjusting shaft 112 is adjusted. The guard member 158 is preferably made of flexible material and its top side connects to the circumference of the adjusting shaft 112.

As mentioned hereinbefore, the metering slides can be operated by rotating the adjusting shaft 112 by means of the arm 118. Although the mentioned position of the metering slides can be obtained in numerous manners by setting and locking the arm 118, such as by means of sector-shaped plates mounted on the frame 1 and, along the edge, provided with a series of adjusting holes, in relation to which the arm 118 can be rotated and locked, in Figures 7 and 8 there is depicted an embodiment wherein one of the metering slides is adjustable, whereas the other one is kept in a fixed position. Accordingly, one metering slide can fully shut off the outlet opening, whereas the other one can be adjusted to a desired spread pattern; in this situation, a spread pattern towards only one side can be obtained, which is of importance to the so-called "fringe spreading".

In the embodiment represented in Figures 7 and 8, instead of the adjusting shaft 112, there are provided two concentrically extending adjusting shafts 160 and 161. A metering slide is adjustable by means of each of the adjusting shafts 160, 161 in the same manner as by means of the adjusting shaft 112 for the two metering slides as described hereinbefore. Again, the adjusting shaft 160 is supported in the bearings 113. In the same manner as the arm 118 is mounted on the adjusting shaft 112, an arm 162 is mounted on the adjusting shaft 160 and an arm 163 is mounted on the adjusting shaft 161. The arm 163 is longer than the arm 162 and is spring-loaded, viz. in the sense that the arm 163 is pushed towards or against the arm 162. Due to the fact that the arm 163 is provided with a protruding pin 164 which falls into a hole in the arm 162, the two arms 162, 163 are mutually fixed and the two metering slides are moved by actuating the arms. During rotation, the arms 162 and 163 can be moved along sector-shaped plates 165 and 166 provided with holes and rigidly attached to the frame 1, and then be fixed relative to these plates 165, 166 in a desired position. The two arms 162 and 163 can be uncoupled by means of a pin 167. In the embodiment of the invention shown here, this is only practicable in the lowest position of the arms 162, 163; in this lowest position, the two metering openings are shut off. The lowest hole in the plate 165 from where the pin 167 can be fed through the two plates 165 and 166 and the arm 163 has an additional recess for protrusions 168, 169 on the pin 167. In a particular position, the pin 167 can be fed through the plate 165 and subsequently through the arm 163 until the first protrusion 168 strikes the arm 163, whereupon, as the pin 167 is pushed further, the arm 163 is pushed in the direction of the plate 166 and is released from the arm 162. Finally, when the pin has been fed through the plate 166, this can be rotated and the pin is fixed by the second protrusion 169 which, bearing against the plate 165, prevents the pin 167 from being pushed out again. The arm 163 is now fixed in relation to the plates 165, 166, while the arm 162 is freely rotatable, so that herewith the respective corresponding metering slide can be actuated through the adjusting shaft 160.

For the purpose of putting the implement according to the invention into an oblique position, which is of importance to the so-called "fringe spreading", there is pivotably mounted a tilting plate 171 between one of the lower lifting arms 170 of the lifting device of the tractor and one of the main frame beams 11 (Figure 7). This tilting plate is connected pivotably about a pin 172 with the main frame beam 11 and has three holes, where, in the position as shown in Figure 7, a pin 173 and a pin 174 are inserted in the two upper holes, and that in such a manner that the position of the plate 171 is fixed in relation to the main frame beam 11. When the top pin 173 is removed, the tilting plate 171 rotates and the main frame beam 11 comes a little down, namely to the point where the pin 174 blocks any further downward motion. By subsequent insertion of the pin 173 into the lowest hole, the position of the tilting plate 171, tipped indeed, is again fixed in relation to the main frame beam 11. Due to the fact that such a mechanism is only provided on one side of the implement, the implement is suspended in an oblique position behind the vehicle carrying same. It will be obvious that, instead of making use of three holes in the tilting plate 171 and corresponding pins 173, 174, the more expensive solution of making use of an actuating cylinder 175 can be chosen, which actuating cylinder should then be placed between the tilting plate 171 and a support 176 attached to the main frame beam 11. In Figure 7, this cylinder is drawn in dash lines.

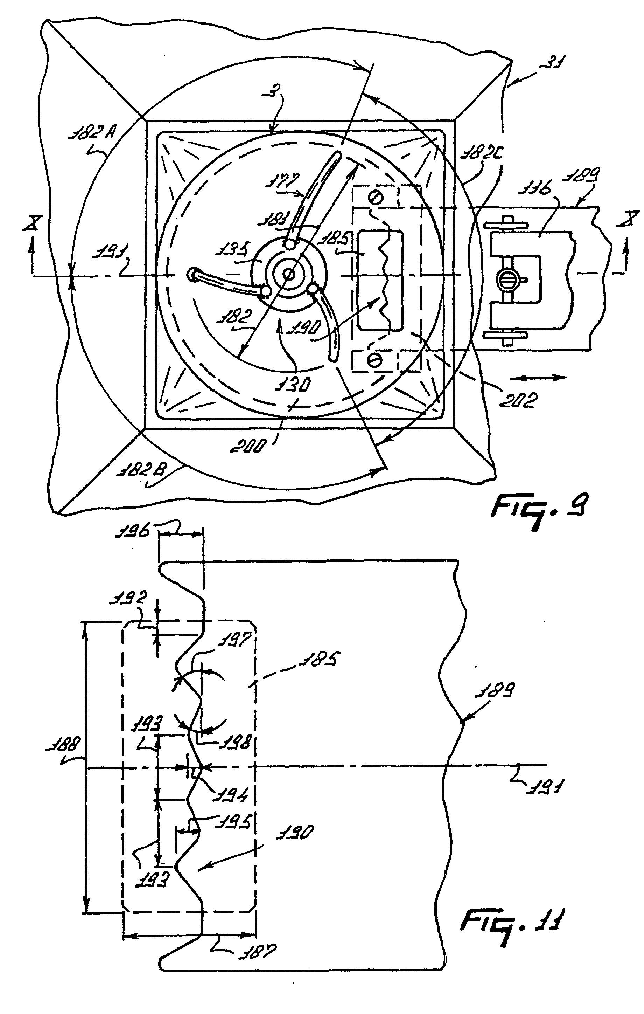

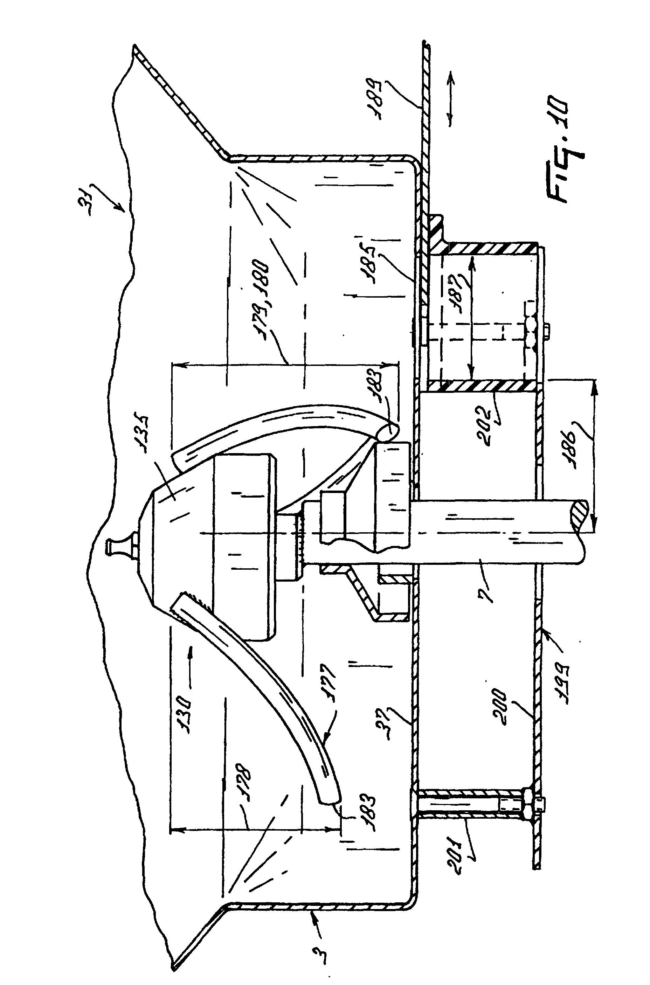

Figures 9 to 11 show an embodiment comprising an alternative outlet nozzle. As shown in Figure 3, in the outlet nozzles 3 and 4 there are provided delivery members constituted by stirring members which, during operation, will keep the material loose in the outlet nozzles and prevent the latter from being clogged up. Said delivery members 130 provided in the outlet nozzles 3 and 4 are identical and are symmetrically situated in relation to the centre plane 43. Therefore only the stirring member 130 will be described, which stirring member is disposed in the outlet nozzle 3 and shown in further detail specifically in Figures 9 and 10. The stirring member 130 is disposed on the shaft 7 of the spreading member 5 in a similar manner as the stirring member 130 in Figure 3. Therefore, for a more detailed description reference is made to the text pertaining to Figures 3 to 6. The stirring member according to Figures 9 and 10 differs from that according to Figures 3 and 5 in that the stirring means are differently produced. To the conical part 135 there are fitted three stirring means 177 made of thread. The stirring means 177 are bent and extend from the conical part 135 in the direction of the bottom of the outlet nozzle 3. The dimensions of the stirring means 177 and the angles at which the conical part 135 is disposed are shown in Figures 9 and 10 by the reference numbers 178 to 182. The dimensions are as follows:
178 is approximately 62 mm, 179 is approximately 82 mm, 180 is approximately 82 mm, 181 is approximately 130 mm, 182 is approximately 95 mm, 182A is approximately 112°, 182B is approximately 118° and 182C is approximately 130°.

The ends 183 of the stirring means 177 are straightly flattened and have a diameter of approximately 8 mm.

The outlet nozzle 3 further comprises a substantially right-angled outlet opening 185, which is located substantially perpendicularly relative to a perpendicular centre plane 191 through the axis of rotation 7. The distance between the edge of the outlet opening 185 and the centre of the axis of rotation 7 is indicated by the reference numeral 186 and amounts to approximately 50 mm. The dimensions of the metering opening are indicated in Figure 11 by the reference numeral 187 for the width, which amounts to approximately 45 mm, and by the reference numeral 188 for the length, which amounts to approximately 100 mm. The metering slide 189 is made of striplike material and provided at one end with an indented edge 190. Said indented edge 190 is symmetrically situated in relation to the perpendicular centre plane 191. The more a tine is situated in the vicinity of the longitudinal centre line, the more the height of the tines decreases. The dimensions and the angles of the tines are indicated in Figure 11 by the reference numerals 192 to 198:
192 is approximately 4 mm, 193 is approximately 23 mm, 194 is approximately 4.5 mm, 195 is approximately 8.5 mm, 196 is approximately 15 mm, 197 is approximately 40° and 198 is approximately 23°.

Under the bottom of the outlet nozzle 3 and remote therefrom there is disposed a guard member 199. Said guard member 199 is constituted by a circular plate 200 having a radius of approximately 125 mm, which circular plate is arranged at a distance of approximately 43 mm from the bottom of the delivery member 3 by means of distance tubes 201. Under the outlet opening 185 there is disposed a shaft 202 which is clamped between the plate 199 and the bottom of the outlet nozzle 3. The right-angled shaft 202 is preferably made of synthetic material and constitutes a guide means for the material which is supplied to the spreading member. The dimensions of the shaft 202 approximately equal those of the metering opening while its height amounts to approximately 43 mm. The function of the guard member 199 is to avoid that granules which come into contact with the spreading member, e.g. with the blades thereof, will rebound in an undesired manner.

It has been proved experimentally that the outlet nozzle according to Figures 9 to 11 is particularly suitable for so-called quick types of fertilizer, i.e. types of fertilizer whose granules have a relatively smooth surface, such as Nitran, and consequently are delivered relatively quickly through the metering opening. Spreading tests have proved that with the construction according to Figures 9 to 11 there is obtained a good spread pattern both for quick and for somewhat slower types of fertilizer.

## Claims

1. An implement for spreading granular and/or pulverulent material, which implement comprises both a hopper provided with at least one outlet opening (185) and at least one spreading member (5; 6), where the outlet opening (185) is capable of being further closed or opened at choice by a metering slide (189), the end of which, directed to the outlet opening (185), being provided with an indented edge (190), said indented edge having tines in the plane of the metering slide (189), the height of which tines decreasing the more an indentation is situated in the vicinity of the longitudinal centre line of the outlet opening (185).

2. An implement as claimed in claim 1, **characterized in that** the outlet opening (185) is substantially right-angled.

3. An implement as claimed in claim 2, **characterized in that** the outlet opening (185) is located substantially perpendicularly to a perpendicular centre plane (191) through an axis of rotation (7; 8) of a spreading member (5; 6).

4. An implement as claimed in claim 3, **characterized in that** the distance between an edge of the outlet opening (185) and the centre of an axis of rotation (7) amounts to approximately 50 mm.

5. An implement as claimed in any one of the preceding claims, **characterized in that** the outlet opening (185) has a width of approximately 45 mm and a length of approximately 100 mm.

6. An implement as claimed in any one of the preceding claims, **characterized in that** the indented edge (190) is symmetrically situated in relation to the perpendicular centre plane (191).

7. An implement as claimed in any one of the preceding claims, **characterized in that** the outer tines have a height of approximately 8.5 mm.

8. An implement as claimed in any one of the preceding claims, **characterized in that** the inner tines have a height of approximately 4.5 mm

9. An implement as claimed in any one of the preceding claims, **characterized in that** the indented edge (190) comprises four tines.

10. An implement as claimed in any one of the preceding claims, **characterized in that** the mutual distance between the tops of the tines amounts to approximately 23 mm.

11. An implement as claimed in any one of the preceding claims, **characterized in that** the sides of the outer tines include an angle of approximately 40° with the base of the tines.

12. An implement as claimed in any one of the preceding claims, **characterized in that** the sides of the inner tines include an angle of approximately 23° with the base of the tines.

13. An implement as claimed in any one of the preceding claims, **characterized in that** the metering slide (189) extends straightly from the edge of the outlet opening (185) to the outer tine over a length of approximately 4 mm.

14. An implement as claimed in any one of the preceding claims, **characterized in that** the metering slide (189) is made of striplike material.

## Patentansprüche

1. Vorrichtung zum Streuen von körnigem und/oder pulverigem Gut, wobei die Vorrichtung sowohl einen mit mindestens einer Auslaßöffnung (185) versehenen Vorratsbehälter als auch mindestens ein Streuglied (5; 6) umfaßt, wobei die Auslaßöffnung (185) durch einen Dosierschieber (189) wahlweise weiter geschlossen oder geöffnet werden kann, dessen auf die Auslaßöffnung (185) gerichtetes Ende mit einem ausgebuchteten Rand (190) versehen ist, wobei der ausgebuchtete Rand in der Ebene des Dosierschiebers (189) Zinken aufweist, deren Höhe abnimmt, je näher eine Ausbuchtung an der Längsmittellinie der Auslaßöffnung (185) liegt.

2. Vorrichtung nach Anspruch 1,
**dadurch gekennzeichnet, daß** die Auslaßöffnung (185) im wesentlichen rechtwinklig ist.

3. Vorrichtung nach Anspruch 2,
**dadurch gekennzeichnet, daß** die Auslaßöffnung (185) im wesentlichen senkrecht zu einer senkrechten Mittelebene (191) durch eine Drehachse (7; 8) eines Streugliedes (5; 6) angeordnet ist.

4. Vorrichtung nach Anspruch 3,
**dadurch gekennzeichnet, daß** der Abstand zwischen einem Rand der Auslaßöffnung (185) und der Mitte einer Drehachse (7) etwa 50 mm beträgt.

5. Vorrichtung nach einem der vorhergehenden Ansprüche,
**dadurch gekennzeichnet, daß** die Auslaßöffnung (185) eine Breite von etwa 45 mm und eine Länge von etwa 100 mm aufweist.

6. Vorrichtung nach einem der vorhergehenden Ansprüche,
**dadurch gekennzeichnet, daß** der ausgebuchtete Rand (190) relativ zu der senkrechten Mittelebene (191) symmetrisch angeordnet ist.

7. Vorrichtung nach einem der vorhergehenden Ansprüche,
**dadurch gekennzeichnet, daß** die äußeren Zinken eine Höhe von etwa 8,5 mm aufweisen.

8. Vorrichtung nach einem der vorhergehenden Ansprüche,
**dadurch gekennzeichnet, daß** die inneren zinken eine Höhe von etwa 4,5 mm aufweisen.

9. Vorrichtung nach einem der vorhergehenden Ansprüche,
**dadurch gekennzeichnet, daß** der ausgebuchtete Rand (190) vier Zinken umfaßt.

10. Vorrichtung nach einem der vorhergehenden Ansprüche,
**dadurch gekennzeichnet, daß** der gegenseitige Abstand zwischen den oberen Enden der Zinken etwa 23 mm beträgt.

11. Vorrichtung nach einem der vorhergehenden Ansprüche,
**dadurch gekennzeichnet, daß** die Seiten der äußeren Zinken einen Winkel von etwa 40° mit der Basis der Zinken bilden.

12. Vorrichtung nach einem der vorhergehenden Ansprüche,
**dadurch gekennzeichnet, daß** die Seiten der inneren Zinken einen Winkel von etwa 23° mit der Basis der Zinken bilden.

13. Vorrichtung nach einem der vorhergehenden Ansprüche,
**dadurch gekennzeichnet, daß** sich der Dosierschieber (189) in gerader Richtung vom Rand der Auslaßöffnung (185) über eine Länge von etwa 4 mm zum äußeren Zinken erstreckt.

14. Vorrichtung nach einem der vorhergehenden Ansprüche,
**dadurch gekennzeichnet, daß** der Dosierschieber (189) aus Flachmaterial hergestellt ist.

## Revendications

1. Epandeur centrifuge pour produits granulés et/ ou pulvérulents, lequel épandeur comprend à la fois une trémie fournie avec au moins une ouverture de sortie (185) et au moins un élément formant épandage (5, 6), où l'ouverture de sortie (185) est capable d'être ultérieurement fermée ou ouverte au choix par une coulisse de dosage (189), dont l'extrémité, dirigée vers l'ouverture de sortie (185), est fournie avec une arrête dentelée (190), ladite arrête dentelée possédant des dents dans le plan de la coulisse de dosage (189), la hauteur desdites dents diminuant plus une dentelure est située à proximité de ligne centrale longitudinale de l'ouverture de sortie (185).

2. Epandeur centrifuge selon la revendication 1,
**caractérisé en ce que** l'ouverture de sortie (185) forme substantiellement un angle droit.

3. Epandeur centrifuge selon la revendication 2,
**caractérisé en ce que** l'ouverture de sortie (185) est située substantiellement perpendiculairement à un plan central perpendiculaire (191) à travers un axe de rotation (7, 8) d'un épandeur centrifuge (5, 6).

4. Epandeur centrifuge selon la revendication 3,
**caractérisé en ce que** la distance entre l'arrête de l'ouverture de sortie (185) et le centre d'un axe de rotation (7) s'élève approximativement à 50 mm.

5. Epandeur centrifuge selon l'une quelconque des revendications précédentes, **caractérisé en ce que** l'ouverture de sortie (185) possède une largeur d'environ 45 mm et une longueur d'environ 100 mm.

6. Epandeur centrifuge selon l'une quelconque des revendications précédentes, **caractérisé en ce que** l'arrête dentelée (190) est située symétriquement par rapport au plan central perpendiculaire (191).

7. Epandeur centrifuge selon l'une quelconque des revendications précédentes, **caractérisé en ce que** les dents extérieures possèdent une hauteur d'environ 8,5 mm.

8. Epandeur centrifuge selon l'une quelconque des revendications précédentes, **caractérisé en ce que** les dents intérieures possèdent une hauteur d'environ 4,5 mm.

9. Epandeur centrifuge selon l'une quelconque des revendications précédentes, **caractérisé en ce que** l'arrête dentelée (190) comprend quatre dents.

10. Epandeur centrifuge selon l'une quelconque des revendications précédentes, **caractérisé en ce que** la distance mutuelle entre les sommets des dents s'élève à approximativement 23 mm.

11. Epandeur centrifuge selon l'une quelconque des revendications précédentes, **caractérisé en ce que** les côtés des dents extérieures forment un angle d'environ 40° avec la base des dents.

12. Epandeur centrifuge selon l'une quelconque des revendications précédentes, **caractérisé en ce que** les côtés des dents intérieures forment un angle d'environ 23° avec la base des dents.

13. Epandeur centrifuge selon l'une quelconque des revendications précédentes, **caractérisé en ce que** la coulisse de dosage (189) s'étende directement de l'arrête de l'ouverture de sortie (185) à la dent extérieure sur une longueur d'environ 4 mm.

14. Epandeur centrifuge selon l'une quelconque des revendications précédentes, **caractérisé en ce que** la coulisse de dosage (189) est composée de matériau de type dépouillé.
